(19) **Europäisches Patentamt / European Patent Office / Office européen des brevets**

(11) **EP 3 127 947 B1**

(12) **EUROPEAN PATENT SPECIFICATION**

(45) Date of publication and mention
of the grant of the patent:
**10.10.2018 Bulletin 2018/41**

(21) Application number: **15773873.3**

(22) Date of filing: **24.03.2015**

(51) Int Cl.:
*C08J 7/12* (2006.01)  *H01M 4/88* (2006.01)
*H01M 8/02* (2016.01)  *H01M 8/10* (2016.01)
*C08J 5/22* (2006.01)  *H01M 8/1004* (2016.01)
*H01M 8/1018* (2016.01)  *H01M 4/92* (2006.01)

(86) International application number:
**PCT/JP2015/058858**

(87) International publication number:
**WO 2015/151923 (08.10.2015 Gazette 2015/40)**

(54) **CATALYST TRANSFER SHEET, METHOD FOR PRODUCING MEMBRANE ELECTRODE ASSEMBLY, AND METHOD FOR PRODUCING CATALYST LAYER-COATED ELECTROLYTE MEMBRANE**

KATALYSATORTRANSFERFOLIE, VERFAHREN ZUR HERSTELLUNG EINER MEMBRANELEKTRODENBAUGRUPPE UND VERFAHREN ZUR HERSTELLUNG EINER KATALYSATORSCHICHTBESCHICHTETEN ELEKTROLYTMEMBRAN

FEUILLE DE TRANSFERT DE CATALYSEUR, PROCÉDÉ DE PRODUCTION D'ENSEMBLE ÉLECTRODE À MEMBRANE, ET PROCÉDÉ DE PRODUCTION DE MEMBRANE ÉLECTROLYTIQUE REVÊTUE D'UNE COUCHE DE CATALYSEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2014 JP 2014071764**

(43) Date of publication of application:
**08.02.2017 Bulletin 2017/06**

(73) Proprietor: **Toray Industries, Inc.**
**Tokyo 103-8666 (JP)**

(72) Inventors:
• **ADACHI, Shinya**
 **Otsu-shi**
 **Shiga 520-8558 (JP)**

• **IZUHARA, Daisuke**
 **Otsu-shi**
 **Shiga 520-8558 (JP)**

(74) Representative: **Hoefer & Partner Patentanwälte mbB**
**Pilgersheimer Straße 20**
**81543 München (DE)**

(56) References cited:
 JP-A- H06 192 451  JP-A- 2007 114 305
 JP-A- 2007 242 447  JP-A- 2010 056 004
 JP-A- 2010 123 438  US-A- 4 746 576
 US-A1- 2011 240 203  US-B1- 6 296 946

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a catalyst transfer sheet comprising a substrate film having a specific surface state, a method for producing a membrane electrode assembly and a method for producing a catalyst layer-coated electrolyte membrane.

BACKGROUND ART

A fuel cell is one kind of electrical generators which take out electric energy by electrochemically oxidizing a fuel such as hydrogen or methanol, and has received attention as a clean energy supply source, in recent years. Particularly, since a solid polymer fuel cell has a low standard working temperature of around 100°C, and has high energy density, wide application as an electrical generator for a distributed electric power generation facility of a relatively small scale or a mobile object such as an automobile or a marine vessel is expected. Further, the fuel cell also receives attention as an electric supply for small movable equipment or portable equipment, and installation into a mobile phone, a personal computer or the like, in place of secondary cells such as a nickel-metal hydride cell and a lithium ion cell, is expected.

In the fuel cell, usually, anode and cathode electrodes in which a reaction for electric power generation occurs, and a polymer electrolyte membrane which is formed from a proton conductor between the anode and the cathode constitute a membrane electrode assembly (hereinafter, abbreviated as MEA in some cases), and the fuel cell is composed of a cell as a unit comprising separators and the MEA interposed between the separators. Specifically, in the anode electrode, a fuel gas reacts in a catalyst layer to produce protons and electrons, the electrons are sent to an external circuit through an electrode, and protons are conducted to an electrolyte membrane through an electrode electrolyte. On the other hand, in the cathode electrode, an oxidation gas, protons conducted from the electrolyte membrane, and electrons conducted from the external circuit react in a catalyst layer to produce water.

In the solid polymer fuel cell, a further improvement of energy efficiency is required. Therefore, the fuel cell is configured to increase reactive points of an electrode reaction by devising an electrode structure, and to enable hydrogen ions to quickly move by compounding an electrolyte polymer also in an electrode catalyst layer. In order to enable generated hydrogen ions to quickly move to a counter electrode, it is necessary that contact between the electrode catalyst layer and the electrolyte membrane is high, and membrane resistance of an electrolyte membrane itself is reduced. For such occasions, a membrane thickness is preferably small as far as possible.

As such a production method of MEA, a decal method is known in which using two catalyst transfer sheets provided with a catalyst layer formed on one surface of a substrate film by applying a printing method or spraying method, the sheets are arranged so that a catalyst layer surface of the sheet is tangent to each of both sides of an electrolyte membrane, the catalyst layers are transferred by hot press or the like, the substrate films of the catalyst transfer sheet are removed, electrode substrates are arranged so as to be in tangent to each catalyst layer surface, and the resulting article is hot pressed.

When the decal is employed for the production method of MEA, it is desired that coating properties of the catalyst coating liquid to the substrate film are good, and release properties of the substrate film from the catalyst layer after transferring the catalyst layer to the electrolyte membrane are good.

As a substrate for a catalyst transfer sheet, a fluorine resin film such as polytetrafluoroethylene is known (Patent Documents 1, 3). Further, a fluorine resin film which is treated with a hydrophilic surfactant after the surface is treated with an acid solution (Patent Document 2) is known. Further, a substrate film is known in which a substrate sheet of a polymer film, such as polyimide, polyethylene terephthalate, polyparabanic aramid, polyamide (nylon), polysulfone, polyethersulfone, polyphenylene sulfide, polyether ether ketone, polyetherimide, polyarylates or polyethylene napthalate, is coated with a resin, such as a fluorine resin, a melamine resin and a silicone resin (preferably, a fluorine resin), as a release layer according to a publicly known method (Patent Document 3).

PRIOR ART DOCUMENTS

PATENT DOCUMENTS

Patent Document 1: US Patent No. 5,211,984
Patent Document 2: Japanese Patent Laid-open Publication No. 2004-031148
Patent Document 3: Japanese Patent Laid-open Publication No. 2008-226540

## SUMMARY OF THE INVENTION

## PROBLEMS TO BE SOLVED BY THE INVENTION

However, in a support film which has extremely high releasing properties like a fluorine resin film, described in Patent Documents 1 and 2, wetting of a catalyst coating liquid is poor, and the support film repels the catalyst coating liquid, and has a problem with coating properties of the catalyst coating liquid. Even when wettability is improved, the catalyst layer has been separated in a transferring step to deteriorate quality and electric generation performance of the MEA. Moreover, the fluorine resin film is expensive, and therefore the support film has a problem with mass production of the MEA from the viewpoint of reducing cost including disposal cost after use, and is a technology which is low in a possibility as an industrial use.

Further, in a support film described in Patent Document 3 which is formed by laminating a release layer on a general-purpose film, the release layer has contaminated the catalyst layer and has adversely affected electric generation performance and durability of the MEA.

In view of such a background of the prior art, the present invention provides a catalyst transfer sheet in which coating properties of the catalyst coating liquid are good, and release properties of the substrate film from the catalyst layer after transferring the catalyst layer to the electrolyte membrane using a catalyst transfer sheet are good, and which does not contaminate the catalyst layer. Further, the present invention pertains to a method for producing a membrane electrode assembly and a method for producing a catalyst layer-coated electrolyte membrane respectively using the catalyst transfer sheet of the present invention.

## SOLUTIONS TO THE PROBLEMS

In order to solve such problems, the present invention employs the following means. That is, a substrate film for a catalyst transfer sheet, the substrate film being formed by introducing fluorine atoms to at least one surface of a base film that is formed from one or more types of polymers selected from the group consisting of polyethylene, polypropylene, polyethylene terephthalate, polybutylene terephthalate, polyethylene napthalate, polyphenylene sulfide, polysulfones, polyether ketone, polyether ether ketone, polyimides, polyetherimide, polyamides, polyamide-imides, polybenzimidazoles, polycarbonates, polyarylates, and polyvinyl chloride, wherein the ratio, measured by X-ray photoelectron spectroscopy, of the number of fluorine atoms/the number of carbon atoms in the surface (modified surface) to which the fluorine atoms are introduced, is 0.02 or more and 1.9 or less. Further, the present invention provides a catalyst transfer sheet formed by forming a catalyst layer on the modified surface of the substrate film, a method for producing a membrane electrode assembly and a method for producing a catalyst layer-coated electrolyte membrane respectively using the catalyst transfer sheet.

## EFFECTS OF THE INVENTION

According to the substrate film, the coating properties (wettability) of the coating liquid containing a catalyst metal, a carbon material and an electrolyte polymer solution is high, and release properties of a support film in intentionally separating the support film from a catalyst layer after transferring the catalyst layer to an electrolyte membrane using a catalyst transfer sheet, are good, and the catalyst layer is hardly contaminated.

Accordingly, the substrate film is suitable for producing a membrane electrode assembly having high quality and less impurities. For example, the substrate film can be suitably used as catalyst layer support films in uses, such as a fuel cell, a water electrolysis apparatus, a redox flow battery and a metal-air battery, whose production has a step of bringing a catalyst layer into contact with an electrolyte membrane as long as good coating properties, easy release properties or low contaminating properties can be capitalized.

## BRIEF DESCRIPTION OF THE DRAWING

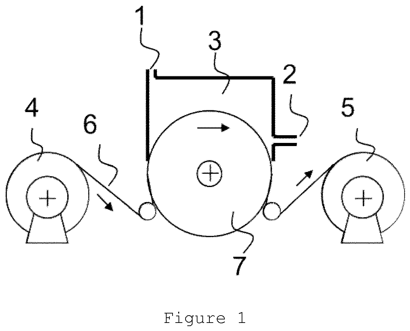

Fig. 1 shows a conceptual view of an apparatus for obtaining a substrate film of the present invention by bringing a film into contact with a fluorine gas.

## EMBODIMENTS OF THE INVENTION

<Substrate Film>

As a base film serving as a base of the substrate film, one that is formed from one or more types of polymers selected from the group consisting of polyethylene, polypropylene, polyethylene terephthalate, polybutylene terephthalate, polyethylene napthalate, polyphenylene sulphide, polysulfones, polyether ketone, polyether ether ketone, polyimides, polyetherimide, polyamides, polyamide-imides, polybenzimidazoles, polycarbonates, polyarylates and polyvinyl chloride, may be used because the base film can have fluorine atoms introduced to its surface and is cheap. When a film is formed from two or more types of polymers, the film may be formed from two or more types of blended polymers, or a laminate obtained by laminating a layer formed from each polymer may be used. From the viewpoint of cost, a monolayer film formed of one type of polymer is preferably used.

The substrate film is one formed by introducing fluorine atoms to at least one surface of the above-mentioned base film. In the present invention, the term "surface modification" refers to substituting fluorine atoms for part of hydrogen atoms coupled with carbon present in the surface of the base film. When the surface modification is performed, this may be further accompanied with the introduction of a hydroxyl group, a carboxylic acid group, or a sulfonic acid group. By introducing a hydroxyl group, a carboxylic acid group, or a sulfonic acid group, it is possible to decrease a contact angle on the surface of the base film, and it becomes possible to control, by composition and properties of the polymer solution, the coating properties (wettability) of the coating liquid (catalyst coating liquid) in preparing a catalyst transfer sheet containing a catalyst metal, a carbon material and an electrolyte polymer solution. In addition, in the present specification, the surface to which the fluorine atoms are introduced is referred to merely as a "modified surface" in some times.

The surface modification may be performed on only one surface of the film or may be performed on both surfaces. When the surface-modified film is used as a catalyst transfer sheet, only one surface is preferably modified in terms of cost. Further, the surface modification in which only a portion having a catalyst coating liquid applied thereto is locally fluorinated may be employed.

In the present invention, the ratio, measured by X-ray photoelectron spectroscopy, of the number of fluorine atoms/the number of carbon atoms in the modified surface, is 0.02 or more and 1.9 or less. Since the ratio of the number of fluorine atoms/the number of carbon atoms in the modified surface is 0.02 or more, it is possible to prepare a membrane electrode assembly of high surface quality in which release properties in intentionally separating a catalyst layer from the modified surface is high, and the catalyst layer hardly chips or defective transfer hardly occurs in the separating step, and it is possible to bring an expensive catalyst metal into contact with the electrolyte membrane with economy. Further, since the ratio of the number of fluorine atoms/the number of carbon atoms is 1.9 or less in the modified surface, the catalyst layer hardly exfoliates or chips in the membrane electrode assembly step, and therefore a production yield of the membrane electrode assembly is improved. From the viewpoint of these, the ratio of the number of fluorine atoms/the number of carbon atoms in the modified surface is preferably not less than 0.03 and not more than 1.5, and more preferably not less than 0.04 and not more than 1.0.

Further, in the substrate film, the ratio, measured by X-ray photoelectron spectroscopy, of the number of oxygen atoms/the number of carbon atoms in the modified surface, is preferably 0.10 or more and 1.0 or less. Since the ratio of the number of oxygen atoms/the number of carbon atoms in the modified surface is 0.10 or more, coating properties (wettability) of the polymer solution on the modified surface tend to be high, and the catalyst layer hardly exfoliates from electrolyte membrane during a step of transferring the catalyst layer to the electrolyte membrane or after the transfer. Further, since the ratio of the number of oxygen atoms/the number of carbon atoms is 1.0 or less, the release properties in intentionally separating the catalyst layer from the modified surface, is high. From the viewpoint of these, the ratio of the number of oxygen atoms/the number of carbon atoms is more preferably not less than 0.15 and not more than 0.8, and moreover preferably not less than 0.20 and not more than 0.7.

In the X-ray photoelectron spectroscopy, the surface of a sample placed in ultrahigh vacuum is irradiated with soft X-rays, and photoelectrons emitted from the surface are detected by an analyzer. When irradiating the sample surface with X-rays under ultrahigh vacuum, photoelectrons are emitted from the surface into a vacuum by a photoelectric effect. When kinetic energy of the photoelectrons is observed, information about composition of elements and a chemical state in the surface can be obtained.

$$E_b = h\nu - E_{kin} - \phi_{sp} \qquad (\text{Formula 1})$$

In the formula 1, $E_b$ is binding energy of bound electrons, hv is energy of soft X-rays, $E_{kin}$ is kinetic energy of photoelectrons, and $\phi$ is a work function of a spectrometer. Here, the binding energy ($E_b$) of bound electrons determined the formula 1 is inherent in an element. Therefore, analyzing energy spectrum of photoelectrons enables identification of elements present in the surface of a substance. Since a distance through which photoelectrons can travel in a substance (mean free path) is several nanometers, a detection depth in the present analytical method is several nanometers. That is, in the present invention, the ratio of the number of fluorine atoms/the number of carbon atoms and the ratio of the number of oxygen atoms/the number of carbon atoms in the modified surface are ratios of the number of atoms at a distance of several nanometers below the surface.

In the X-ray photoelectron spectroscopy, atomic information of the surface can be obtained from a value of binding energy of bound electrons in a substance, and information about a valence and a binding state can be obtained from an energy shift of each peak. Moreover, it is possible to determine a ratio of the number of atoms by using a peak area ratio. Measurement conditions of X-ray photoelectron spectroscopy used in the present invention are as follows.

Equipment: Quantera SXM (manufactured by Physical Electronics, Inc. (PHI))
Excitation X-ray: monochromatic Al Kα1 and Kα2 lines
(1486.6 eV)
X-ray diameter: 100μm (analysis region: 100 μmφ)
Photoelectron escape angle: 45° (an inclination of a detector relative to a sample surface)
Smoothing: 9 points smoothing
Horizontal axis correction: A main peak of C1s peak was met with 284.6 eV

Further, a contact angle (θ) of water on the modified surface is preferably 90 degrees or less. When the contact angle is 90 degrees or less, uneven application is hardly produced in applying the coating liquid containing a catalyst metal, carbon and an electrolyte polymer solution, and a catalyst layer coating of high surface quality is obtained. The contact angle is the most intuitive measure representing wetting of a solid by liquid. In the present invention, a value measured by a drop method was employed. Specifically, measurement was performed according to JIS R 3257. Water was added dropwise to the modified surface of the substrate film of the present invention in place of glass, and an angle which a tangent line of a water droplet at a contact point between the modified surface and the formed water droplet forms with the modified surface, was measured.

A thickness of the substrate film can be appropriately determined by a thickness of a catalyst layer to be produced or a production apparatus, and is not particularly limited. The thickness is preferably 5 μm to 500 μm from the viewpoint of handling. Further, the thickness of 50 μm to 200 μm is more preferred from the viewpoint of productivity and effects of reducing cost and deformation during drying.

<Method for Producing Substrate Film>

A method for producing the substrate film is not particularly limited, and various publicly known methods can be employed. Examples of publicly known methods include fluorination by highly valent metal fluoride, indirect fluorination anchored by a halogen exchange reaction, fluorination by an electrolytic method and the like in addition to a direct fluorination reaction by a fluorine gas (Journal of Synthetic Organic Chemistry, Vol. 31, No. 6 (1973), p 441-454). Among these method, a direct fluorination reaction in which a base film is brought into contact with a fluorine gas can be preferably applied from the viewpoint of mass productivity and controllability of a gas introduction amount.

Those skilled in the art can appropriately experimentally determine the control of an amount of fluorine atom introduction by a fluorine gas according to equipment or facilities to be used by adjusting a fluorine gas concentration in a gas containing a fluorine gas, a temperature or pressure of a gas containing a fluorine gas, and a transferring speed of a base film in the case of continuously processing a substrate film. It is preferred to perform the surface modification by bringing a base film into contact with a fluorine gas while continuously transferring the base film from the viewpoint of cost and quality stability for applications requiring mass productivity of a substrate film in which the substrate film is used for continuously preparing a catalyst transfer sheet.

One example of an apparatus which brings a base film into contact with a fluorine gas while continuously transferring the film, is shown in Fig. 1 as a conceptual view. The surface modification is carried out in a fluorine-gas contacting chamber 3 equipped with a gas supply port 1 and a gas discharge port 2 while continuously transferring a film substrate 6 from a winding off part 4 to a winding part 5. A support roll 7 is configured to minimizing leakage of a fluorine gas. Further, the support roll 7 can control a temperature in the fluorination reaction by incorporating a heater or a coolant in the support roll 7.

<Catalyst Transfer Sheet>

The catalyst transfer sheet of the present invention is used for transferring a catalyst layer to an electrolyte membrane or a gas diffusion electrode for a fuel cell, and is formed by forming a catalyst layer on the modified surface of the above-mentioned substrate film of the present invention. The catalyst layer is preferably a layer containing a catalyst metal, a carbon material and an electrolyte polymer solution. If required, a polymer binder other than the electrolyte polymer may be added for the purpose of preventing exfoliation of the catalyst metal. Composition, a constitution and a shape of the catalyst layer are not particularly limited. The catalyst layer may be a monolayer, or may be a laminated body of catalyst layers having different composition, or may be applied in a pattern. The catalyst layer can be experimentally designed according to uses in which the catalyst layer is used as a membrane electrode assembly, for example, a fuel cell, a water electrolysis apparatus, a redox flow battery, a metal-air battery and a hydrogen compression apparatus.

A thickness of the catalyst layer can be experimentally determined according to use for which the catalyst layer is used, and in general, it is preferably 1 $\mu$m or more and 500 $\mu$m or less.

As a catalyst metal contained in the catalyst layer, a publicly known metal can be used. For example, as metal particles, a metal, such as platinum, palladium, ruthenium, rhodium, iridium, manganese, cobalt or gold, is preferably used. One type among these metals may be used singly, or two or more types thereof may be used in combination as an alloy or a mixture .

Further, when particles supporting the above-mentioned metal are used, sometimes use efficiency of the metal catalyst is improved to enable to contribute to improvement of electric generation performance and durability of the membrane electrode assembly and cost reduction. As the supporting body, carbon materials, $SiO_2$, $TiO_2$, $ZrO_2$, $RuO_2$ and zeolite can be used, and the carbon materials are preferred from the viewpoint of electron conductivity.

Examples of the carbon material include amorphous carbon materials and crystalline carbon materials. For example, carbon blacks such as channel black, thermal black, furnace black and acetylene black are preferably used in terms of electron conductivity and a size of specific surface area. Examples of the furnace black include "VULCAN XC-72" (registered trademark), "VULCAN P" (registered trademark), "BLACK PEARLS 880" (registered trademark), "BLACK PEARLS 1100" (registered trademark), "BLACK PEARLS 1300" (registered trademark), "BLACK PEARLS 2000" (registered trademark) and "REGAL 400" (registered trademark) produced by CABOT CORPORATION, "Ketjen Black" EC (registered trademark) and EC600 JD produced by Ketjenblack International Co., and #3150 and #3250 produced by Mitsubishi Chemical Corporation, and examples of the acetylene black include "DENKA BLACK" (registered trademark) produced by Denka Co., Ltd. In addition to the carbon black, natural graphites, artificial graphites obtained from pitch, cokes and organic compounds such as polyacrylonitrile, a phenolic resin and a fulane resin, and carbon can also be used.

As a configuration of these carbon materials, in addition to an amorphous particle-shaped carbon material, fiber-like, scale-like, tube-shaped, circular cone-shaped, and megaphone-shaped carbon materials can also be used. Further, these carbon materials subjected to post-processing such as heat treatment and chemical treatment may be used. These materials may be used as a supporting body for the above-mentioned metal, or may be used singly as an electron conduction improver of the catalyst layer.

The electrolyte polymer solution is one obtained by dissolving an electrolyte polymer in a solvent, and a dispersion in which the electrolyte polymer is not completely dissolved is also expressed as an electrolyte polymer solution for convenience sake in the present invention. As the electrolyte polymer, publicly known polymers containing an ionic group, such as hydrocarbon-based polymers and fluorine-based polymers, can be used.

Examples of the ionic group include a sulfonic acid group ($-SO_2(OH)$), a sulfuric acid group ($-OSO_2(OH)$), a sulfonimide group ($-SO_2NHSO_2R$ (R represents an organic group)), a phosphonic acid group ($-PO(OH)_2$), a phosphoric acid group ($-OPO(OH)_2$), a carboxylic acid group ($-CO(OH)$), a hydroxyl group ($-OH$) and salts thereof. Further, two or more types of these ionic groups can be contained in the electrolyte polymer. A combination of two types or more of the ionic groups is appropriately determined depending on a structure of a polymer. Among ionic groups, the phosphoric acid group and the sulfonic acid group are preferred from the viewpoint of proton conductivity and productivity, Na salt, Mg salt, Ca salt, ammonium salt or the like thereof may be contained.

Specific examples of the electrolyte polymer include hydrocarbon-based ion conducting polymers formed by introducing an ionic group in polymer materials such as polyphenylene oxide, polyether ketone, polyether ether ketone, polyether sulfone, polyether ether sulfone, polyether phosphine oxide, poly(ether ether phosphine oxide), polyphenylene sulfide, polyamide, polyimide, polyetherimide, polyimidazole, polyoxazole, polyphenylene, polycarbonates, polyarylates, polyethylene, polypropylene, amorphous polyolefins, polystyrene, polystyrene-maleimide copolymer, (meth)acrylic copolymers such as polymethyl acrylate and polyurethane; and perfluoro-based ion-conducting polymers having an ionic group which is composed of a fluoroalkylether side chain and a fluoroalkylether main chain.

Further, an amount of the electrolyte polymer contained in the catalyst layer is not particularly limited. The amount of the electrolyte polymer contained in the catalyst layer is preferably in the range not less than 0.1 wt% and not more than 50 wt%, and more preferably not less than 1 wt% and not more than 30 wt%. When the amount is 0.1 wt% or more, exfoliation of the catalyst metal or a catalyst-supported carbon material is easily prevented, and when the amount is less than 50 wt%, permeation of a fuel or gas permeability is hardly interfered with and has less adverse effect on electric generation performance.

The catalyst transfer sheet of the present invention is obtained by applying the coating liquid containing a catalyst metal, a carbon material and an electrolyte polymer solution onto the modified surface of the substrate film of the present invention, and then removing a solvent from the coating liquid.

The electrolyte polymer solution is formed by dissolving or dispersing the electrolyte polymer in the solvent. The solvent capable of being used is not particularly limited, and examples thereof include water, aprotic polar solvents such as N,N-dimethylacetamide, N,N-dimethylformamide, N-methyl-2-pyrrolidone, dimethyl sulfoxide, sulfolane, 1,3-dimethyl-2-imidazolidinone and hexamethylphosphonetriamide; ester-based solvents such as $\gamma$-butyrolactone and butyl acetate; carbonate-based solvent such as ethylene carbonate and propylene carbonate; alkylene glycol monoalkyl ethers such as ethylene glycol monomethyl ether, ethylene glycol monoethyl ether, propylene glycol monomethyl ether and propylene glycol monoethyl ether; alcohol-based solvents such as isopropanol, n-propanol, ethanol and methanol; and aromatic solvents such as toluene and xylene. In addition, the electrolyte polymer includes an electrolyte precursor polymer which becomes an electrolyte by subsequent processing.

As a method of preparing the coating liquid containing a catalyst metal, a carbon material and an electrolyte polymer solution of the present invention, in general, a publicly known method is applicable. For example, a catalyst coating liquid is prepared by adding an electrolyte polymer solution, catalyst metal particles and/or catalyst metal-supported carbon material particles and stirring/kneading the resulting mixture, and the catalyst coating liquid is applied onto the modified surface of the substrate film of the present invention, dried, and pressed as required, and thereby a catalyst transfer sheet can be produced. As a method of applying a catalyst coating liquid, publicly known methods can be employed, and techniques such as knife coating, direct roll coating (comma coating), gravure coating, spray coating, brush coating, dip coating, die coating, vacuum die coating, curtain coating, flow coating, spin coating, reverse coating and screen printing, are applicable, and die coating and comma coating are suitable for continuous coating.

Publicly known methods such as heating, hot air and an infrared heater may be selected for evaporation of a solvent from the catalyst coating liquid coating applied onto the substrate film of the present invention. A time, temperature, wind velocity and wind direction for solvent-evaporation can be appropriately experimentally determined.

<Method for Producing Membrane Electrode Assembly>

The catalyst transfer sheet of the present invention can be used for a method for producing a membrane electrode assembly including a step of bringing a catalyst layer surface into contact with an electrolyte membrane to bond the catalyst layer, and then separating the substrate from the catalyst layer. In the step, when the catalyst layer is separated/exfoliated from the substrate of the catalyst transfer sheet, there is a missing in the catalyst layer of the membrane electrode assembly, or surface quality is deteriorated. When the catalyst transfer sheet of the present invention is used, the membrane electrode assembly can be produced without such separation/exfoliation of the catalyst layer. Further, when adhesion between the substrate and the catalyst layer is too high, the substrate cannot be easily separated from the catalyst layer, and defects and missing are produced in the surface of the catalyst layer, or transfer becomes defective, and this causes a reduction of performance of the membrane electrode assembly. When the catalyst transfer sheet of the present invention is used, release properties in intentionally separating the substrate from the catalyst layer become high and a membrane electrode assembly of high quality can be produced.

The electrolyte membrane used in such a method for producing a membrane electrode assembly is not particularly limited. Examples of the electrolyte membrane include aromatic hydrocarbon-based polymers having an ionic group such as ionic group-containing polyphenylene oxide, ionic group-containing polyether ketone, ionic group-containing polyether ether ketone, ionic group-containing polyether sulfone, ionic group-containing polyether ether sulfone, ionic group-containing polyether phosphine oxide, ionic group-containing poly(ether ether phosphine oxide), ionic group-containing polyphenylene sulfide, ionic group-containing polyamide, ionic group-containing polyimide, ionic group-containing polyetherimide, ionic group-containing polyimidazole, ionic group-containing polyoxazole and ionic group-containing polyphenylene; and perfluoro-based ion-conducting polymers having an ionic group which is composed of a fluoroalkylether side chain and a fluoroalkylether main chain.

As the ionic group referred to herein, one or more types selected from the group consisting of a sulfonic acid group ($-SO_2(OH)$), a sulfuric acid group ($-OSO_2(OH)$), a sulfonimide group ($-SO_2NHSO_2R$ (R represents an organic group)), a phosphonic acid group ($-PO(OH)_2$), a phosphoric acid group ($-OPO(OH)_2$), a carboxylic acid group ($-CO(OH)$) and metal salt thereof, can be preferably employed. Among these, it is more preferred to have at least any one of the sulfonic acid group, the sulfonimide group, the sulfuric acid group and the phosphonic acid group in terms of high proton conductivity, and it is the most preferred to have at least the sulfonic acid group in terms of hydrolysis resistance.

To the method of bringing a catalyst layer surface of the catalyst transfer sheet into contact with an electrolyte membrane to bond the catalyst layer, a publicly known technology is applicable. For example, it is possible to bond a catalyst layer to an electrolyte membrane by bringing the catalyst layer surface into contact with both surfaces or one surface of the electrolyte membrane, and hot pressing the electrolyte membrane with the catalyst transfer sheet to produce a catalyst layer-coated electrolyte membrane. A pressing temperature can be appropriately determined according to heat resistance of the electrolyte membrane and the substrate film, and is preferably 20°C to 200°C. A pressing pressure can also be experimentally appropriately determined according to materials to be used, and is preferably 1 to 100 MPa. Pressing may be performed in a batch type manner or by continuously roll pressing.

A method of separating the substrate from the catalyst layer is not particularly limited. The substrate may be pinched at its end and torn off, or may be torn off by sticking a vacuum chuck to a support film under suction. Further, a method of separating a substrate while continuously transferring the substrate and winding it in the form of a roll, is also preferred from the viewpoint of productivity. Since the catalyst transfer sheet of the present invention has good release properties, a recovered substrate can be reused.

A gas diffusion electrode made of a carbon paper or a carbon fabric is arranged on the catalyst layer of the electrolyte membrane to which the catalyst layer is thus transferred (catalyst layer-coated electrolyte membrane), and thereby a membrane electrode assembly can be produced.

In the above, the method of transferring the catalyst transfer sheet of the present invention to the electrolyte membrane, has been described; however, the catalyst transfer sheet of the present invention can also be used for transferring a catalyst layer to a gas diffusion electrode composed of a carbon paper or a carbon fabric. That is, the catalyst transfer sheet of the present invention can also be used for a method for producing a membrane electrode assembly including a step of bringing a catalyst layer surface into contact with a gas diffusion layer to bond the catalyst layer, and then separating the substrate from the catalyst layer. When the catalyst coating liquid is directly applied to the gas diffusion layer, an uneven thickness of the catalyst layer easily occurs due to asperities on the surface of the gas diffusion layer. When the catalyst transfer sheet of the present invention is used, sometimes the thickness of the catalyst layer becomes uniform, and electric generation performance and durability of the membrane electrode assembly are improved.

Further, a carbon layer composed of a carbon powder and a binder may be formed on the gas diffusion electrode. This is a preferred aspect of the gas diffusion electrode which is suitable for the case where a catalyst layer is transferred using a catalyst transfer sheet since the carbon layer prevents the catalyst layer from penetrating into a space between carbon fibers of a carbon paper or carbon fabric to form a nonuniform catalyst layer.

Examples of the carbon powder include amorphous carbon materials and crystalline carbon materials. For example, carbon blacks such as channel black, thermal black, furnace black and acetylene black are preferably used in terms of electron conductivity and a size of specific surface area. Examples of the furnace black include "VULCAN XC-72" (registered trademark), "VULCAN P" (registered trademark), "BLACK PEARLS 880" (registered trademark), "BLACK PEARLS 1100" (registered trademark), "BLACK PEARLS 1300" (registered trademark), "BLACK PEARLS 2000" (registered trademark) and "REGAL 400" (registered trademark) produced by CABOT CORPORATION, "Ketjen Black" EC (registered trademark) and EC600 JD produced by Ketjenblack International Co., and #3150 and #3250 produced by Mitsubishi Chemical Corporation, and examples of the acetylene black include "DENKA BLACK" (registered trademark) produced by Denka Co., Ltd. In addition to the carbon black, natural graphites, artificial graphites obtained from pitch, cokes and organic compounds such as polyacrylonitrile, a phenolic resin and a fulane resin, and carbon can also be used. As a configuration of these carbon materials, in addition to an amorphous particle-shaped carbon material, fiber-like, scale-like, tube-shaped, circular cone-shaped, and megaphone-shaped carbon materials can also be used.

The binder is not particularly limited. Specific examples of the binder include hydrocarbon-based polymers such as polymer materials (e.g., polyphenylene oxide, polyether ketone, polyether ether ketone, polyether sulfone, polyether ether sulfone, polyether phosphine oxide, poly(ether ether phosphine oxide), polyphenylene sulfide, polyamide, polyimide, polyetherimide, polyimidazole, polyoxazole, polyphenylene, polycarbonates, polyarylates, polyethylene, polypropylene, amorphous polyolefins, polystyrene, polystyrene-maleimide copolymer, (meth)acrylic copolymers such as polymethyl acrylate and polyurethane) and polymer materials having an ionic group introduced thereto, and polymers containing fluorine atoms, such as polyvinyl fluoride, polyvinylidene fluoride, polyhexafluoropropylene, polytetrafluoroethylene, polyperfluoroalkylvinylether, fluorine-based polyacrylate and fluorine-based polymethacrylate, can also be used.

[EXAMPLES]

Hereinafter, the present invention will be described in more detail by way of examples concerning a substrate film which uses a polyethylene terephthalate film as a substrate. The present invention is not limited to these examples . The surface modification of polyethylene, polypropylene, polybutylene terephthalate, polyethylene napthalate, polyphenylene sulphide, polysulfones, polyether ketone, polyether ether ketone, polyimides, polyetherimide, polyamides, polyamide-imides, polybenzimidazoles, polycarbonates, polyarylates, and polyvinyl chloride, may also be prepared according to the present examples. In addition, measuring conditions of the respective physical properties are as follows.

(1) Ratio of Number of Fluorine Atoms/Number of Carbon Atoms in Film Surface (F/C Ratio)

In the present invention, a value measured by X-ray photoelectron spectroscopy is employed. Since a distance through which photoelectrons can travel in a substance (mean free path) is several nanometers, a detection depth in the present analytical method is several nanometers, the ratio of the number of fluorine atoms/the number of carbon atoms of the present invention is a ratio of the number of atoms at a distance of several nanometers below the surface, and the ratio was expressed on the carbon atom basis (C/C = 1). One example of measurement conditions of X-ray photoelectron spectroscopy is described below. In addition, the ratio of the number of oxygen atoms/the number of carbon atoms (O/C ratio) can also be acquired by the same method.

Equipment: Quantera SXM (manufactured by Physical Electronics, Inc. (PHI))
Excitation X-ray: monochromatic Al Kα1 and Kα2 lines
(1486.6 eV)
X-ray diameter: 100μm (analysis region: 100 μmϕ)
Photoelectron escape angle: 45° (an inclination of a detector relative to a sample surface)
Smoothing: 9 points smoothing
Horizontal axis correction: A main peak of C1s peak was met with 284.6 eV

(2) Contact Angle of Water

A contact angle of water was measured by a method according to JIS R 3257 (1999).

(3) Wettability Evaluation

A catalyst coating liquid formed of a Pt-supported carbon catalyst TEC10V50E produced by TANAKA KIKINZOKU KOGYO K.K., a 20% "Nafion (registered trademark) solution produced by Du Pont K.K. and n-propanol, was applied onto the substrate film. An amount of catalyst adhesion was adjusted so as to be 0.5 mg/cm$^2$ on the platinum weight equivalent basis. With respect to wettability of the coating liquid, the surface quality of a catalyst layer was visually observed before drying after applying and evaluated.

(4) Evaluation of Early Separation Resistance

After wettability evaluation described above, the catalyst coating liquid was dried at 100°C to prepare a catalyst transfer sheet. The catalyst transfer sheet was flicked lightly twice from the support film side with a middle finger to evaluate the presence or absence of exfoliation of the catalyst layer by visual observation.

(5) Evaluation of Easy Release Properties

A polymer solution formed of a 20 wt% of precursor of sulfonated poly(ether ketone) (refer to Japanese Patent Laid-Open Publication No. 2006-561103) and N-methyl-2-pyrrolidone (NMP) was continuously applied by casting onto a PET film ("Lumirror" (registered trademark) T60 produced by Toray Industries Inc., thickness: 125 μm), dried at 100°C, immersed in a 10 wt% aqueous solution of sulfuric acid at 60°C for 10 minutes, and immersed in pure water for 30 minutes, and then a water content was evaporated at 80°C, and the polymer coating was manually separated from the PET film to obtain a hydrocarbon-based electrolyte membrane.

The catalyst layer side of the catalyst transfer sheet after the above-mentioned evaluation of early separation resistance was brought into contact with both surfaces of the electrolyte membrane, and hot pressed for 10 minutes under the conditions of 150°C and 4 MPa. Then, the substrate film was manually separated from the catalyst transfer sheet, and a state of the catalyst layer adhering to the electrolyte membrane after separating the substrate film and a residue of the catalyst layer on the substrate film are visually observed to be evaluated.

[Example 1]

A PET film ("Lumirror" (registered trademark) T60 produced by Toray Industries Inc., thickness: 125 μm) was put in a 20 L pressure vessel made of stainless steel equipped with a supply port and a discharge port of a fluorine gas and air, a nitrogen gas was blown into the vessel at a flow rate of 100 ml/min to purge the inside of the vessel for 1 hour, and then a mixed gas of fluorine and air in proportions of 10 : 90 by volume was blown into the vessel at a flow rate of 10 ml/min to react the PET film with the mixed gas for 10 minutes. Subsequently, a nitrogen gas was blown into the vessel at a flow rate of 100 ml/min to purge the mixed gas for 1 hour, and the vessel was opened to obtain a substrate film A.

The ratio of the number of fluorine atoms/the number of carbon atoms and the ratio of the number of oxygen atoms/the number of carbon atoms in the processed surface of the substrate film A, a contact angle of water, wettability, early separation resistance, and easy release properties are summarized in Table 1.

[Examples 2, 3, 4, 5 and Comparative Example 1]

Production was performed varying a ratio between fluorine and air of a mixed gas of fluorine and air of Example 1 or varying an injection time of the mixed gas to obtain substrate films B to E and G. The ratio of the number of fluorine atoms/the number of carbon atoms and the ratio of the number of oxygen atoms/the number of carbon atoms in each of these substrate films, a contact angle of water, wettability, early separation resistance, and easy release properties are summarized in Table 1.

[Example 6]

Using a continuous fluorine surface treatment apparatus which has a roll-shaped film winding off part capable of controlling a transferring speed and a film winding part, and has, therebetween, a fluorine-gas contacting chamber including a supply port and a discharge port of a fluorine gas and air, the surface modification of the PET film ("Lumirror" (registered trademark) T60 produced by Toray Industries Inc., thickness: 125 $\mu$m) was continuously performed at a transferring speed of 1 m/min while blowing the mixed gas of fluorine and air (volume ratio of 30 : 70) at a flow rate of 10 ml/min into the fluorine-gas contacting chamber to obtain a continuously processed membrane of a substrate film F. The ratio of the number of fluorine atoms/the number of carbon atoms and the ratio of the number of oxygen atoms/the number of carbon atoms in the processed surface of the substrate film F, a contact angle of water, wettability, early separation resistance, and easy release properties are summarized in Table 1.

[Comparative Example 2]

A substrate film for a catalyst transfer sheet was prepared in the same manner as in Example 6 except for using a polytetrafluoroethylene (PEFE) film in place of the substrate film F. The ratio of the number of fluorine atoms/the number of carbon atoms, the ratio of the number of oxygen atoms/the number of carbon atoms, a contact angle of water, wettability, early separation resistance, and easy release properties are summarized in Table 1.

[Example of Production of Membrane Electrode Assembly]

A catalyst coating liquid formed of a Pt-supported carbon catalyst TEC10V50E produced by TANAKA KIKINZOKU KOGYO K.K., a 20% "Nafion (registered trademark)" solution produced by Du Pont K.K. and n-propanol, was applied onto the substrate film F, and dried to prepare a catalyst transfer sheet. An amount of catalyst adhesion of the catalyst transfer sheet was adjusted so as to be 0.5 mg/cm$^2$ on the platinum weight equivalent basis.

"Nafion (registered trademark) product number NRE211CS" produced by Du Pont K.K. was used as an electrolyte membrane, and the catalyst layer side of the catalyst transfer sheet was brought into contact with both surfaces the electrolyte membrane, and hot pressed for 10 minutes under the conditions of 120°C and 2 MPa. Then, the substrate film was manually separated from the catalyst transfer sheet. Next, electrode substrates (carbon paper TGP-H-060 produced by Toray Industries Inc.) were overlaid on the catalyst layers on the both surfaces, and hot pressed for 10 minutes under the conditions of 130°C and 3 MPa to obtain a membrane electrode assembly.

Table 1

| | Symbol | Processing Condition | | | Results | | | | | |
| --- | --- | --- | --- | --- | --- | --- | --- | --- | --- | --- |
| | | Fluorine /Air Ratio (volume ratio) | Processing Time (minute) | Processing Temperature (°C) | F/C Ratio (Ratio of Number of Atoms) | O/C Ratio (Ratio of Number of Atoms) | Contact Angle (°) | Wettability | Early Separation | Easy Release Properties |
| Example 1 | A | 10/90 | 10 | 25 | 0.115 | 0.400 | 61 | good | none | good |
| Example 2 | B | 10/90 | 60 | 25 | 0.197 | 0.473 | 44 | good | none | good |
| Example 3 | C | 5/95 | 10 | 25 | 0.037 | 0.420 | 70 | good | none | good |
| Example 4 | D | 20/80 | 1 | 100 | 0.268 | 0.488 | 35 | good | none | good |
| Example 5 | E | 20/80 | 10 | 100 | 0.282 | 0.610 | 33 | good | none | good |
| Example 6 | F | 5/95 | 5 | 50 | 0.500 | 0.390 | 30 | good | none | good |
| Comparative Example 1 | G | 0/100 | 10 | 25 | 0.000 | 0.380 | 72 | good | none | defective transfer |
| Comparative Example 2 | PTFE | | | | 2.000 | 0.000 | 100 | there is a missing | present | - |

EP 3 127 947 B1

DESCRIPTION OF REFERENCE SIGNS

1    Gas supply port
2    Gas discharge port
3    Fluorine-gas contacting chamber
4    Film winding off part
5    Film winding part
6    Film substrate
7    Support roll

**Claims**

1. A catalyst transfer sheet, wherein a catalyst layer is formed on a modified surface of a substrate film being formed by introducing fluorine atoms to at least one surface of a base film that is formed from one or more types of polymers selected from the group consisting of polyethylene, polypropylene, polyethylene terephthalate, polybutylene terephthalate, polyethylene napthalate, polyphenylene sulphide, polysulfones, polyether ketone, polyether ether ketone, polyimides, polyetherimide, polyamides, polyamide-imides, polybenzimidazoles, polycarbonates, polyarylates, and polyvinyl chloride, wherein the ratio, measured by X-ray photoelectron spectroscopy, of the number of fluorine atoms/the number of carbon atoms in the surface to which the fluorine atoms are introduced, i.e., modified surface, is 0.02 or more and 1.9 or less.

2. The catalyst transfer sheet according to claim 1, wherein a contact angle of water on the modified surface is 90 degrees or less.

3. The catalyst transfer sheet according to claim 1 or 2, wherein the introduction of fluorine atoms is performed by bringing the base film into contact with a fluorine gas.

4. The catalyst transfer sheet according to any one of claims 1 to 3, wherein the ratio, measured by X-ray photoelectron spectroscopy, of the number of oxygen atoms/the number of carbon atoms in the modified surface is 0.10 or more and 1.0 or less.

5. Use of the catalyst transfer sheet according to any of claims 1 to 4 for producing membrane electrode assemblies for a fuel cell, for a water electrolysis apparatus, for a hydrogen compression apparatus, for a redox flow battery and for a metal-air battery.

6. A method for producing a catalyst layer-coated electrolyte membrane comprising a step of bringing a catalyst layer surface of the catalyst transfer sheet according to any of claims 1 to 4 into contact with an electrolyte membrane to bond the catalyst layer, and then separating the substrate film from the catalyst layer.

7. A method for producing a membrane electrode assembly comprising a step of arranging a gas diffusion electrode made of a carbon paper or a carbon fabric on the catalyst-coated electrolyte membrane produced by the method for producing the catalyst layer-coated electrolyte membrane according to claim 6.

**Patentansprüche**

1. Katalysatortransferfolie, wobei eine Katalysatorschicht auf einer modifizierten Oberfläche eines Substratfilms gebildet wird, indem Fluoratome in mindestens eine Oberfläche eines Basisfilms, der aus einer oder mehreren Polymertypen ausgewählt aus der Gruppe bestehend aus Polyethylen, Polypropylen, Polyethylenterephthalat, Polybutylenterephthalat, Polyethylennaphthalat, Polyphenylensulfid, Polysulfonen, Polyetherketon, Polyetheretherketon, Polyimiden, Polyetherimiden, Polyamiden, Polyamidimiden, Polybenzimidazolen, Polycarbonaten, Polyarylaten und Polyvinylchlorid gebildet wird, eingeführt werden, wobei das Verhältnis, gemessen durch Röntgenphotoelektronenspektroskopie, der Anzahl der Fluoratome / der Anzahl der Kohlenstoffatome in der Oberfläche, in die die Fluoratome eingeführt werden, d.h. die modifizierte Oberfläche, 0,02 oder mehr und 1,9 oder weniger beträgt.

**2.** Katalysatortransferfolie nach Anspruch 1, wobei ein Kontaktwinkel von Wasser auf der modifizierten Oberfläche 90 Grad oder weniger beträgt.

**3.** Katalysatortransferfolie nach Anspruch 1 oder 2, wobei das Einbringen von Fluoratomen durch in Kontakt bringen des Basisfilms mit einem Fluorgas durchgeführt wird.

**4.** Katalysatortransferfolie nach einem der Ansprüche 1 bis 3, wobei das Verhältnis, gemessen durch Röntgenphotoelektronenspektroskopie, der Anzahl der Sauerstoffatome / der Anzahl der Kohlenstoffatome in der modifizierten Oberfläche 0,10 oder mehr und 1,0 oder weniger beträgt.

**5.** Verwendung der Katalysatortransferfolie nach einem der Ansprüche 1 bis 4 zur Herstellung von Membranelektrodenanordnungen für eine Brennstoffzelle, für eine Wasserelektrolysevorrichtung, für eine Wasserstoffkompressionsvorrichtung, für eine Redox-Flow-Batterie und für eine Metall-Luft-Batterie .

**6.** Verfahren zur Herstellung einer katalysatorschichtbeschichteten Elektrolytmembran, umfassend einen Schritt des in Kontakt bringens einer Katalysatorschichtoberfläche der Katalysatortransferfolie nach einem der Ansprüche 1 bis 4 mit einer Elektrolytmembran, um die Katalysatorschicht zu binden und dann den Substratfilm von der Katalysatorschicht zu trennen.

**7.** Verfahren zur Herstellung einer Membran-Elektroden-Anordnung, umfassend einen Schritt des Anordnens einer Gasdiffusionselektrode aus einem Kohlepapier oder einem Kohlenstoffgewebe auf der katalysatorbeschichteten Elektrolytmembran, die nach dem Verfahren zur Herstellung der katalysatorschichtbeschichteten Elektrolytmembran gemäß Anspruch 6 hergestellt wird.

**Revendications**

**1.** Feuille de transfert de catalyseur, dans laquelle une couche de catalyseur est formée sur une surface modifiée d'un film de substrat formée en introduisant des atomes de fluor sur au moins une surface d'un film de base formé à partir d'un ou de plusieurs type(s) de polymères choisis dans le groupe constitué de polyéthylène, de polypropylène, de polyéthylène téréphtalate, de polybutylène téréphtalate, de polyéthylène naphtalate, de polysulfure de phénylène, de polysulfones, de polyéthercétone, de polyétheréthercétone, de polyimides, de polyétherimide, de polyamides, de polyamideimides, de polybenzimidazoles, de polycarbonates, de polyarylates, et de polychlorure de vinyle, où le rapport, mesuré par spectroscopie de photoélectrons induits par rayons X, du nombre d'atomes de fluor / le nombre d'atomes de carbone dans la surface sur laquelle les atomes de fluor sont introduits, c'est-à-dire la surface modifiée, est supérieur ou égal à 0,02 et inférieur ou égal à 1,9.

**2.** Feuille de transfert de catalyseur selon la revendication 1, dans laquelle l'angle de contact de l'eau sur la surface modifiée est inférieur ou égal à 90 degrés.

**3.** Feuille de transfert de catalyseur selon la revendication 1 ou 2, dans laquelle l'introduction d'atomes de fluor est effectuée en mettant le film de base en contact avec du fluor gazeux.

**4.** Feuille de transfert de catalyseur selon l'une quelconque des revendications 1 à 3, dans laquelle le rapport, mesuré par spectroscopie de photoélectrons induits par rayons X, du nombre d'atomes d'oxygène / le nombre d'atomes de carbone dans la surface modifiée est supérieur ou égal à 0,10 et inférieur ou égal à 1,0.

**5.** Utilisation de la feuille de transfert de catalyseur selon l'une des revendications 1 à 4 pour produire des ensembles membrane-électrodes pour une pile à combustible, pour un appareil d'électrolyse de l'eau, pour un appareil de compression de l'hydrogène, pour une pile rédox et pour une pile métal-air.

**6.** Procédé de production d'une membrane électrolytique revêtue d'une couche de catalyseur comprenant une étape consistant à mettre une surface de couche de catalyseur de la feuille de transfert de catalyseur selon l'une des revendications 1 à 4 en contact avec une membrane électrolytique pour lier la couche de catalyseur, puis à séparer le film de substrat de la couche de catalyseur.

**7.** Procédé de production d'un ensemble membrane-électrodes comprenant une étape consistant à agencer une électrode à diffusion gazeuse réalisée en un papier carbone ou un tissu de carbone sur la membrane électrolytique revêtue de catalyseur produite par le procédé de production de la membrane électrolytique revêtue d'une couche de catalyseur selon revendication 6.

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5211984 A
- JP 2004031148 A
- JP 2008226540 A
- JP 2006561103 A

**Non-patent literature cited in the description**

- *Journal of Synthetic Organic Chemistry,* 1973, vol. 31 (6), 441-454